# EUROPÄISCHE PATENTANMELDUNG

(11) **EP 1 449 640 A2**
(43) Veröffentlichungstag der Anmeldung: **25.08.2004**
(21) Anmeldenummer: 04001440.9
(22) Anmeldetag: 23.01.2004
(51) Int. Cl.: B32B 3/10, H05B 6/76

(54) **Sichtfenster für einen mit Mikrowellen beaufschlagten Raum**

(30) Priorität: 19.02.2003 DE 10306882
(71) Anmelder: Schott Glas, 55122 Mainz (DE); CARL-ZEISS-STIFTUNG trading as Schott Glas, 55122 Mainz (DE)
(72) Erfinder: Schaupert, Kurt Dr., 65719 Hofheim (DE)
(74) Vertreter: Fleck, Hermann-Josef, Dr.-Ing.

(57) **Zusammenfassung**

Die Erfindung betrifft ein Sichtfenster für einen mit Mikrowellen beaufschlagten Raum, mit einem Trägerrahmen (10) und mindestes einer daran angebrachten durchsichtigen Deckplatte (12a) zum Verschließen des Raumes, wobei die mindestes eine Deckplatte (12a) zumindest einseitig von einem für Mikrowellen undurchlässigen, metallenen Schirm (14a) abgedeckt ist. Der Schirm (14a) ist gegenüber dem Trägerrahmen (10) beweglich gelagert und kann zur Erhöhung des Durchsichtvermögens mittels einer Antriebseinrichtung (16, 18) in Bewegung versetzt werden.

## Beschreibung

Die Erfindung betrifft ein Sichtfenster für einen mit Mikrowellen beaufschlagten Raum, mit einem Trägerrahmen und mindestens einer daran angebrachten durchsichtigen Deckplatte zum Verschließen des Raumes. Die mindestens eine Deckplatte ist zumindest einseitig von einem für Mikrowellen undurchlässigen, metallenen Schirm abgedeckt.

Aus dem Stand der Technik ist bekannt, für Mikrowellengeräte, wie sie beispielsweise als Kochgeräte verwendet werden, Sichtfenster vorzusehen, um den Zustand des Gargutes ohne Öffnen der Tür des Mikrowellengerätes zu ermöglichen. Da Mikrowellenstrahlung gesundheitliche Schäden beim Benutzer verursachen kann und die Strahlung innerhalb des Garraumes gehalten werden soll, wird üblicherweise an dem Sichtfenster eine die Strahlung abschirmende Metallplatte angebracht, welche Löcher mit einem Durchmesser von ungefähr 1 mm aufweist. Durch die Stege zwischen den Löchern wird die Sicht in den Innenraum behindert. Insbesondere stört ein derartiges Lochraster beim Erkennen feiner Details im Garraum.

Aus der DE 32 31 516 A1 ist bekannt, zur Mikrowellenabschirmung die Scheibe des Sichtfensters mit elektrisch leitenden transparenten Schichten auszurüsten. Das Beschichten der Scheibe mit derartigen Schichten ist jedoch sehr aufwendig und erhöht die Herstellungskosten für ein Mikrowellengerät erheblich.

Es ist daher Aufgabe der Erfindung, ein Sichtfenster für einen mit Mikrowellen beaufschlagten Raum anzugeben, welches es ermöglicht, auch feine Details innerhalb des Raumes zu erkennen. Darüber hinaus soll das erfindungsgemäße Sichtfenster einfach und kostengünstig in der Herstellung sein.

Diese Aufgabe der Erfindung wird durch die Merkmale des Anspruches 1 gelöst. Vorteilhafte Weiterbildungen sind in den Unteransprüchen beschrieben.

Demgemäss ist der Schirm gegenüber dem Trägerrahmen beweglich gelagert. Um das Durchsichtvermögen zu erhöhen, kann der Schirm mittels einer Antriebseinrichtung in Bewegung versetzt werden. Bei einem derartigen bewegten Schirm nimmt das menschliche Auge die Störung der Sicht durch die Stege zwischen den Löchern des Schirmes kaum noch war, so dass auch kleine Details erkennbar werden.

Der Schirm kann kostengünstig als Gitternetz, als Metallplatte mit eingebrachtem Lochraster oder als dergleichen durchbrochene, flächige Anordnung ausgebildet sein.

Um den bei modernen Küchengeräten erhobenen Designansprüchen zu genügen, kann der Schirm und/oder die Deckplatte und/oder der Trägerrahmen zumindest bereichsweise rechteckig, rund oder auch beliebig geformt sein.

Zur Erhöhung des Durchsichtvermögens lässt sich der Schirm gegenüber dem Trägerrahmen horizontal linear, vertikal linear, diagonal linear, kreisförmig, irregulär oder dergleichen beliebig bewegen.

Gemäß einer Ausführungsform mit rund ausgebildetem Schirm und/oder Trägerrahmen kann eine kreisförmige Bewegung des Schirmes gegenüber dem Trägerrahmen um den Mittelpunkt des Schirmes herum erfolgen. Dabei kann beim Ausführen einer derartigen kreisförmigen Bewegung des Schirmes gegenüber dem Trägerrahmen eine vorgegebene Drehrichtung beibehalten werden.

Gemäß einer besonders bevorzugten Ausführungsform kann der Schirm gegenüber dem Trägerrahmen mit einer vorgegebenen Schwingungsamplitude und Schwingungsfrequenz bzw. Drehfrequenz bewegt werden. Um die Störung der Sicht durch die Stege zwischen den einzelnen Löchern des Schirmes zu vermeiden, kann der Wert der Schwingungsamplitude mindestens dem Halben in Schwingungsrichtung gemessenen Abstand zweier Durchbrüche im Schirm entsprechen.

Die Bewegung des Schirmes gegenüber dem Trägerrahmen kann mit einer Schwingungsfrequenz im Bereich von etwa 1 bis 50 Schwingungen pro Sekunde vorgegeben sein. Ab einer Schwingungsfrequenz von etwa 20 Schwingungen pro Sekunde ist ein gitterförmiger Schirm annähernd unsichtbar und wird vom menschlichen Auge nur noch als Grautönung wahrgenommen.

Für den Fall, dass der Wert für die Schwingungsamplitude vergrößert wird, kann der Wert für die Schwingungsfrequenz verkleinert werden, ohne dass dies eine wesentliche Beeinträchtigung des Durchsichtvermögens zur Folge hat.

Bevorzugter Maßen besteht der Trägerrahmen zumindest teilweise aus Metall oder dergleichen für Mikrowellen undurchlässigem Material. Um eine besonders gute Abschirmung der Mikrowellenstrahlung zu gewährleisten, kann der Trägerrahmen den Schirm zumindest in dessen Randbereich zumindest einseitig umlaufend überdecken.

Ein besonders gutes Abschirmergebnis wird dadurch erreicht, dass der Schirm in eine am Trägerrahmen zumindest bereichsweise umlaufenden U-förmigen Ausnehmung geführt ist. Darüber hinaus lässt sich mit einer derartigen Anordnung der Schirm besonders sicher im Bewegungsrahmen seiner Schwingungsamplitude festlegen.

Für eine wirkungsvolle Abschirmung kann es notwendig sein, zwischen dem Trägerrahmen und dem Schirm mindestens eine flexible, elektrisch leitende Verbindung herzustellen.

Eine gute Beweglichkeit des Schirmes am Trägerrahmen wird dadurch gewährleistet, dass der Schirm am Trägerrahmen mit mindestens einem elastischen Trägerelement bewegbar festgelegt ist.

In besonders vorteilhafter Weise ist das mindestens eine Trägerelement als ein metallenes, elektrisch leitendes Federelement ausgebildet. Mit einer derartigen Maßnahme ist gleichzeitig eine gute elektrisch leitende Verbindung realisiert.

Eine bevorzugte Ausführungsform weist als Antriebseinheit einen Motor auf, der mit einer Exzenterscheibe oder dergleichen Exzenterantrieb zusammenwirkt. Mit diesen Maßnahmen kann der Schirm auf einfache Weise in oszillierende Bewegungen versetzt werden.

Eine besonders energiesparende Ausführungsform sieht vor, dass die Exzenterscheibe oder der Exzenterantrieb mit dem Schirm über mindestens ein federndes Verbindungselement zur Erzeugung von Schwingungsbewegungen mit der Resonanzfrequenz des Schirmes verbunden ist.

Nachfolgend wird die Erfindung anhand bevorzugter Ausführungsformen unter Bezugnahme auf die beigefügten Zeichnungen näher erläutert.

Es zeigen:
Figur 1 in schematischer Ansicht und im Schnitt eine Tür eines Mikrowellengerätes gemäß einer ersten Ausführungsform;
Figur 2 in schematischer Ansicht und im Schnitt gemäß der Schnittlinie II - II der in Figur 1 gezeigten Ausführungsform des erfindungsgemäßen Sichtfensters;
Figur 3 in schematischer Ansicht und im Schnitt eine Tür eines Mikrowellengerätes gemäß einer weiteren Ausführungsform des erfindungsgemäßen Sichtfensters;
Figur 4 einen Teilbereich eines mit einem Lochraster versehenen Schirmes, wie er beim erfindungsgemäßen Sichtfenster zur Anwendung kommen kann;
Figur 5 in schematischer Draufsicht eine Tür für ein Mikrowellengerät gemäß noch einer weiteren Ausführungsform, wobei das erfindungsgemäße Sichtfenster hierbei rund ausgebildet ist; und
Figur 6 in schematischer Ansicht und im Schnitt gemäß der Schnittlinie VI - VI der in Figur 5 gezeigten Ausführungsform.

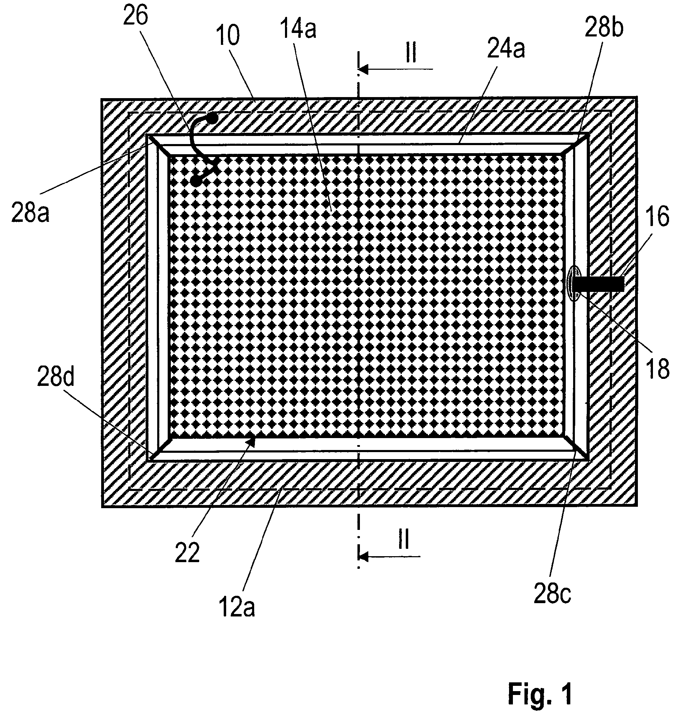

Figur 1 zeigt in schematischer Ansicht und im Schnitt ein Sichtfenster, wie es bei einer Tür eines (nicht gezeigten) Mikrowellengerätes zum Einsatz kommt. Das Sichtfenster weist einen aus einem Metallprofil gefertigten im wesentlichen rechteckigen Trägerrahmen 10 auf. An der dem Betrachter zugewandten Seite ist an dem Trägerrahmen 10 eine durchsichtige, aus Glas gefertigte Deckplatte 12a angebracht, welche in der Figur 1 gestrichelt dargestellt ist. Die Deckplatte 12a dient zum Verschließen des Garraumes des Mikrowellengerätes.

Innerhalb des Trägerrahmens 10 ist ein für Mikrowellen undurchlässiger, metallener Schirm 14a "aufgespannt". Der Schirm 14a verläuft im wesentlichen parallel zur Deckplatte 12a und besteht im wesentlichen aus einer Metallplatte mit einem darin angebrachten Lochmuster. Der Schirm 14a ist am Trägerrahmen 10 an den vier Eckbereichen mittels elastischer Trägerelemente 28a, 28b, 28c und 28d beweglich gelagert. Die Trägerelemente 28a, 28b, 28c und 28d sind in der in Figur 1 gezeigten Ausführungsform als elastische Kunststoffelemente ausgebildet. Diese elastischen Kunststoffelemente stellen eine elektrisch nicht leitende Verbindung zwischen dem Schirm 14a und dem Träger 10 her. Zur Abschirmung der im Garraum des Mikrowellengerätes auftretenden Mikrowellenstrahlung muss jedoch der Schirm 14a elektrisch leitend mit dem Trägerrahmen 10 und dieser mit dem (nicht gezeigten) Körper des Mikrowellengerätes verbunden sein. Zu diesem Zweck ist ein flexibles Leitungsstück 26 zwischen dem Schirm 14a und dem Trägerrahmen 10 angeordnet. Das Leitungsstück 26 stellt eine elektrisch leitende Verbindung zwischen dem Schirm 14a und dem Trägerrahmen 10 her.

Damit der Blick des Betrachters durch den Schirm hindurch nahezu ungehindert auf das im Garraum des Mikrowellengerätes befindliche Gargut fallen kann, wird der Schirm 14a oszillierend bewegt. Zu diesem Zweck ist an der in Figur 1 rechten Seite des Trägerrahmens 10a ein Elektromotor 16 angeordnet, welcher eine Exzenterscheibe 18 antreibt. Die Exzenterscheibe 18 liegt an dem in der Figur 1 rechten Seitenbereich des Schirmes 14a derart an, dass die Bewegung der Exzenterscheibe 18 den Schirm 14a in Bewegung versetzt. Dabei ist die Exzenterscheibe 18 so ausgelegt, dass die Schwingungsamplitude, welche in der Figur 1 dargestellten Ausführungsform in waagrechter Richtung verläuft, mindestens den halben Abstand zweier Löcher in der als Schirm 14a ausgebildeten Metallplatte entspricht. Das Auge des Betrachters nimmt die Störung der Sicht durch die Stege zwischen den Löchern bei einer derartigen Bewegung kaum noch war, so dass auch kleine Details sichtbar werden.

Die Bewegung des Schirms erfolgt mit einigen Schwingungen pro Sekunde, wobei ab ca. 20 Schwingungen pro Sekunde das Gitter für den Betrachter annähernd unsichtbar und nur noch als Grautönung sichtbar ist. Demzufolge kann der Schirm 14a mit einer Schwingungsfrequenz von 1 bis etwa 50 Schwingungen pro Sekunde bewegt werden. Bevorzugter Weise ist die Schwingungsfrequenz größer oder gleich 20 Schwingungen pro Sekunde.

Alternativ zu einer Schwingungsbewegung in einer Vorzugsrichtung kann der Schirm 14a auch zu irregulären Bewegungen angetrieben werden.

Bei Einschalten des Mikrowellengerätes wird der Elektromotor 16 angetrieben, so dass die Sicht des Betrachters während des Garvorganges frei ist. Nach Abschalten des Mikrowellengerätes schaltet auch der Elektromotor 16 ab.

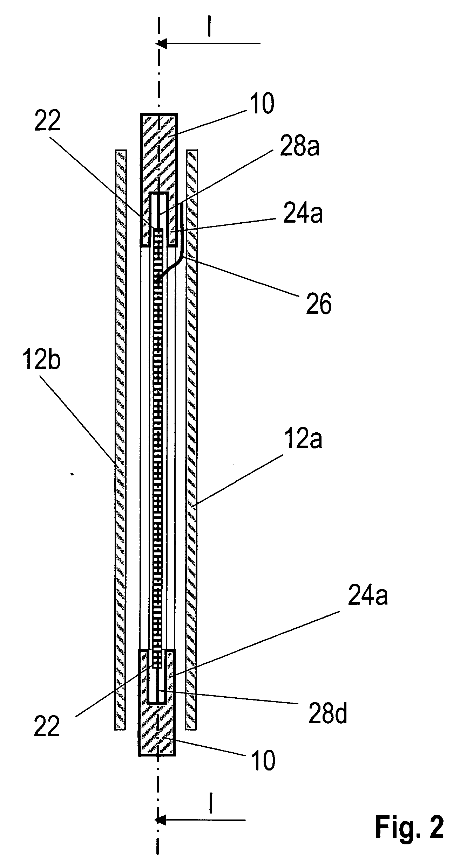

Figur 2 zeigt eine Schnittansicht des in Figur 1 gezeigten Sichtfensters entlang der Schnittlinie II - II. In dieser Schnittansicht verläuft der Schirm 14a vertikal, wobei der untere und obere Randbereich des Schirmes 14a am Trägerrahmen 10 bewegbar festgelegt ist. Am unteren Randbereich des Schirmes 14a verbindet das elastische Trägerelement 28d den Schirm 14a mit dem Trägerrahmen 10. Am oberen Randbereich verbindet das elastische Trägerelement 28a den Schirm 14a mit dem Trägerrahmen 10.

Um eine besonders wirksame Abschirmung der im Garraum des Mikrowellengerätes vorherrschende Mikrowellenstrahlung zu erreichen, umfasst der dem Schirm 14a zugewandte Bereich des Trägerrahmens 10 den Schirm 14a an dessen Randbereich 22 U-förmig. Diese U-förmige Ausnehmung 24a umfasst den gesamten Randbereich des Schirmes 14a umlaufend. Der in Figur 1 horizontale Abstand zwischen dem Randbereich 22 des Schirmes 14a und der U-förmigen Ausnehmung 24a ist aus Abschirmungsgründen sehr klein, bevorzugter Maßen gleich 0,1 mm gewählt.

Alternativ kann der Randbereich 22 des Schirmes 14a auch nur einseitig, d.h. L-förmig vom Trägerrahmen 10 überdeckt sein.

Wie in Figur 2 gezeigt, erstreckt sich die bereits in Figur 1 erwähnte gläserne Deckplatte 12a entlang der Figur 2 rechten Seitenfläche des Schirmes 14a. Die Deckplatte 12a dient zum Verschließen des Garraumes. Auf der anderen, in Figur 2 linken Seitenfläche des Schirmes 14a erstreckt sich ebenfalls parallel zum Schirm 14a eine weitere durchsichtige Deckplatte 12b. Diese ist ebenfalls aus Glas gebildet. Die Deckplatte 12b dient zum Schutz des Schirmes 14a vor unbeabsichtigtem berühren durch den Benutzer.

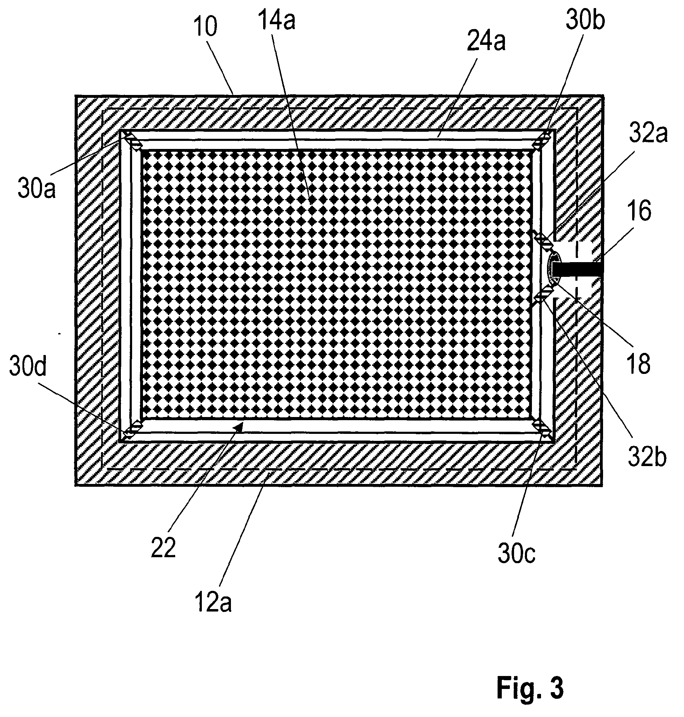

Figur 3 zeigt eine Schnittansicht einer weiteren Ausführungsform eines Sichtfensters, wie es ebenfalls für den Einsatz bei einer Tür eines (nicht gezeigten) Mikrowellengerätes Verwendung findet. Der Schirm 14a ist im Gegensatz zu der in Figur 1 dargestellten Ausführungsform mittels an den Eckbereichen zwischen dem Schirm 14a und dem Trägerrahmen 10 angebrachten Federelemente 30a, 30b, 30c und 30d bewegbar festgelegt. Die Federungselemente sind als Schraubenfedern aus einem elektrisch leitenden Metall ausgebildet. Somit übernehmen die elastischen Trägerelemente 30a, 30b, 30c und 30d neben der elastischen Aufhängung des Schirmes 14a zusätzlich die Aufgabe einer elektrisch leitenden Verbindung zum Trägerrahmen 10. Eine sichere Abschirmung gegen Mikrowellenstrahlung wird somit sichergestellt. Wie bereits anhand von Figur 2 näher ausgeführt, umgreift der dem Schirm 14a zugewandte umlaufende Bereich des Trägerrahmens 10 den Randbereich des Schirmes 14a umlaufend, wodurch ebenfalls eine wirksame Abschirmung gewährleistet ist.

Der Schirm 14a wird gemäß der in Figur 3 gezeigten Ausführungsform in Resonanzfrequenz versetzt. Zu diesem Zweck ist die mit dem Motor 16 verbundene Exzenterscheibe 18 mit dem Schirm 14a durch als Schraubenfeder ausgebildete federnde Verbindungselemente 32a und 32b verbunden.

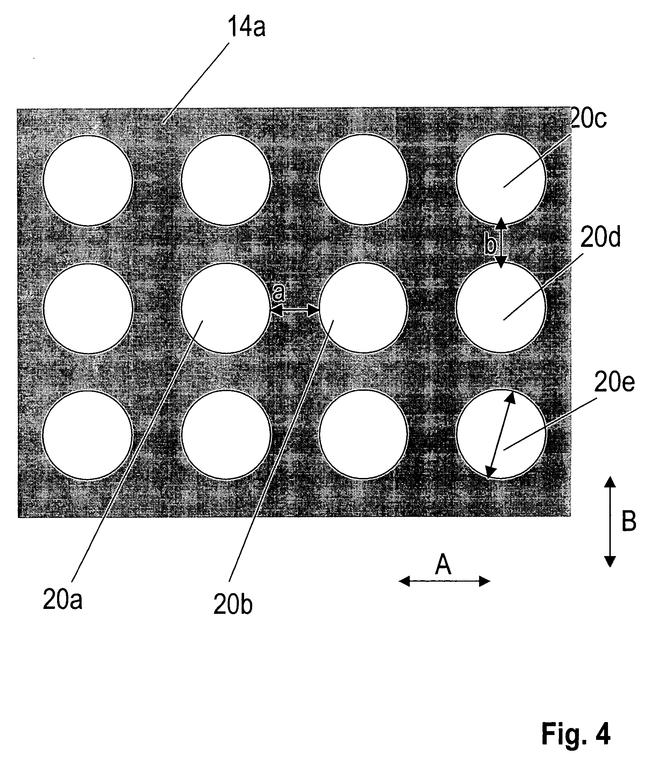

Figur 4 zeigt einen Teilbereich des Schirmes 14a, wobei die Anordnung von Löchern in der angesprochenen Metallplatte näher erläutert ist. Die Löcher haben in dem in Figur 4 gezeigten Ausführungsbeispiel einen Durchmesser von etwa d = 1 mm, wie er anhand des Loches 20e verdeutlicht ist. Der Abstand zwischen zwei Löchern, beispielsweise der Abstand a zwischen den Löchern 20a und 20b und der Abstand b zwischen den Löchern 20c und 20d ist auf die Schwingungsamplitude des Schirmes 14a abgestimmt. So beträgt die Schwingungsamplitude einer Schwingung in Richtung des Doppelpfeiles A mindestens dem halben Abstand (a/2) zwischen den Löchern 20a und 20b. Dementsprechend beträgt die Schwingungsamplitude in Richtung des Doppenpfeiles B mindestens dem halben Abstand (b/2) zwischen den Löchern 20c und 20d. Diese Vorgabe gilt insbesondere bei einer Schwingungsfrequenz von einigen Schwingungen pro Sekunde.

Wenn jedoch die Schwingungsamplitude beispielsweise in Richtung des Doppelpfeiles A größer als der halbe Abstand (a/2) zwischen den Löchern 20a und 20b gewählt wird, kann die Bewegungsfrequenz der Schwingung des Schirmes 14a in Richtung des Doppelpfeiles A verringert werden, da es bei der Erhöhung des Durchsichtvermögens nur auf die Anzahl der an der Sichtlinie des Betrachters vorbeibewegten Löcher ankommt.

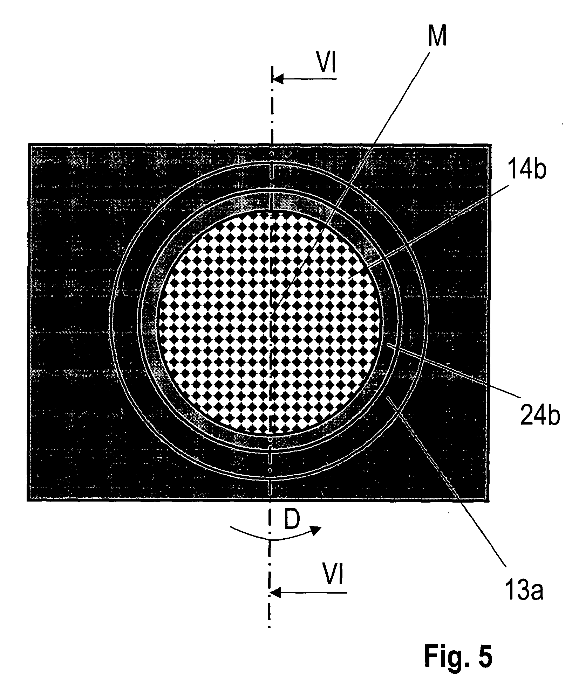

Figur 5 zeigt eine schematische Draufsicht eines kreisrunden Sichtfensters, wie es ebenfalls in der Tür eines Mikrowellengerätes zur Anwendung kommt. Der Trägerrahmen 10 ist dabei so ausgestaltet, dass er in seinem inneren Bereich eine kreisrunde Ausnehmung zur Aufnahme des ebenfalls kreisrund ausgebildeten Schirmes 14b aufweist. Die gläserne Deckplatte 13a ist ebenfalls kreisrund ausgebildet.

Der Schirm 14b wird mittels eines (nicht gezeigten) Elektromotors in Richtung des Pfeiles D um den Mittelpunkt M herum gedreht. Der dem Schirm 14b zugewandte Randbereich 24b umfasst den zugeordneten Randbereich des Schirmes b umlaufend U-förmig.

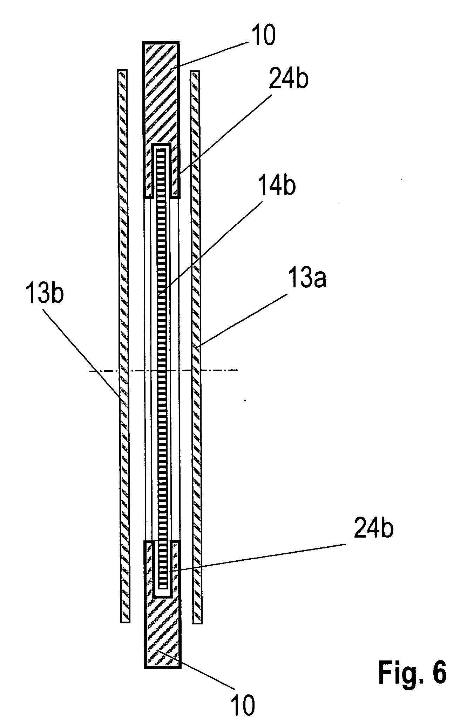

Figur 6 zeigt eine Schnittansicht des in Figur 5 gezeigten Sichtfensters. Hierbei wird nochmals das U-förmige Umgreifen des Randbereiches 24b des Trägerrahmens 10 um den Randbereich des Schirmes 14b deutlich. Der Schirm 14b wird innerhalb der U-förmigen Ausnehmung 24b am Trägerrahmen geführt, wobei beispielsweise eine (nicht gezeigte) Kugellagerung verwendet wird. Ein (ebenfalls nicht gezeigter) Elektromotor treibt beispielsweise über ein Zahnradsystem den kreisrunden Schirm 14b an.

Zwischen dem Schirm 14b und dem Trägerrahmen 10 ist eine (nicht gezeigte) elektrisch leitende Verbindung vorgesehen, die beispielsweise innerhalb der U-förmigen Ausnehmung 24b vorgesehen sein kann. Dabei könnten beispielsweise Schleifkontakte zur Anwendung kommen.

Mit dem erfindungsgemäßen Sichtfenster ist es möglich, dem Betrachter eine weitgehend ungehinderte Sicht in den Innenraum eines Mikrowellengerätes zu gestatten.

## Patentansprüche

1. Sichtfenster für einen mit Mikrowellen beaufschlagten Raum, mit einem Trägerrahmen (10) und mindestes einer daran angebrachten durchsichtigen Deckplatte (12a, 12b; 13a, 13b) zum Verschließen des Raumes, wobei die mindestes eine Deckplatte (12a, 12b; 13a, 13b) zumindest einseitig von einem für Mikrowellen undurchlässigen, metallenen Schirm (14a, 14b) abgedeckt ist,
**dadurch gekennzeichnet, dass**
der Schirm (14a, 14b) gegenüber dem Trägerrahmen (10) beweglich gelagert und zur Erhöhung des Durchsichtvermögens mittels einer Antriebseinrichtung (16, 18) in Bewegung versetzbar ist.

2. Sichtfenster nach Anspruch 1,
**dadurch gekennzeichnet, dass**
der Schirm (14a, 14b) als Gitternetz, Metallplatte mit eingebrachtem Lochraster (20a, 20b, 20c, 20d, 20e) oder dergleichen durchbrochene, flächige Anordnung ausgebildet ist.

3. Sichtfenster nach Anspruch 1 oder 2,
**dadurch gekennzeichnet, dass**
der Schirm (14a, 14b) und/oder die Deckplatte (12a, 12b; 13a, 13b) und/oder der Trägerrahmen (10) zumindest bereichsweise rechteckig, rund oder beliebig geformt ist.

4. Sichtfenster nach Anspruch 1 oder 2,
**dadurch gekennzeichnet, dass**
der Schirm (14a, 14b) gegenüber dem Trägerrahmen (10) horizontal linear, vertikal linear, diagonal linear, kreisförmig, irregulär oder dergleichen bewegbar ist.

5. Sichtfenster nach Anspruch 3 oder 4,
**dadurch gekennzeichnet, dass**
bei rund ausgebildetem Schirm (14b) und/oder Trägerrahmen (10) eine kreisförmige Bewegung des Schirmes gegenüber dem Trägerrahmen (10) um den Mittelpunkt (M) des Schirmes (14b) erfolgt.

6. Sichtfenster nach Anspruch 5,
**dadurch gekennzeichnet, dass**
bei Ausführen einer kreisförmigen Bewegung des Schirmes (14b) gegenüber dem Trägerrahmen (10) eine vorgegebene Drehrichtung (D) beibehalten wird.

7. Sichtfenster nach einem der Ansprüche 1 bis 6,
**dadurch gekennzeichnet, dass**
der Schirm (14a, 14b) gegenüber dem Trägerrahmen (10) mit einer vorgegebenen Schwingungsamplitude und Schwingungsfrequenz bzw. Drehfrequenz bewegbar ist.

8. Sichtfenster nach Anspruch 7,
**dadurch gekennzeichnet, dass**
der Wert der Schwingungsamplitude mindestens dem halben, in Schwingungsrichtung (A; B) gemessenen Abstand (a; b) zweier Durchbrüche (20a, 20b; 20c, 20d) im Schirm (14a) entspricht.

9. Sichtfenster nach Anspruch 7 oder 8,
**dadurch gekennzeichnet, dass**
die Schwingungsfrequenz mit einem Wert im Bereich von 1 bis 50 Schwingungen pro Sekunde vorgegeben ist.

10. Sichtfenster nach einem der Ansprüche 7 bis 9,
**dadurch gekennzeichnet, dass**
die Schwingungsfrequenz mit einem Wert größer oder gleich 20 Schwingungen pro Sekunde vorgegeben ist.

11. Sichtfenster nach Anspruch 9 oder 10,
**dadurch gekennzeichnet, dass**
bei Vergrößerung des Wertes für die Schwingungsamplitude der Wert für die Schwingungsfrequenz verkleinert ist.

12. Sichtfenster nach einem der Ansprüche 1 bis 11,
**dadurch gekennzeichnet, dass**
der Trägerrahmen (10) zumindest teilweise aus Metall oder dergleichen für Mikrowellen undurchlässigem Material besteht.

13. Sichtfenster nach Anspruch 12
**dadurch gekennzeichnet, dass**
der Trägerrahmen (10) den Schirm (14a, 14b) zumindest in dessen Randbereich (22) zumindest einseitig umlaufend überdeckt.

14. Sichtfenster nach einem der Ansprüche 1 bis 13,
**dadurch gekennzeichnet, dass**
der Schirm (14a, 14b) in einer am Trägerrahmen (10) zumindest bereichsweise umlaufenden U-förmigen Ausnehmung (24a; 24b) geführt ist.

15. Sichtfenster nach einem der Ansprüche 1 bis 14,
**dadurch gekennzeichnet, dass**
zwischen dem Trägerrahmen (10) und dem Schirm (14a) mindestens eine flexible, elektrisch leitende Verbindung (26) besteht.

16. Sichtfenster nach einem der Ansprüche 1 bis 15,
**dadurch gekennzeichnet, dass**
der Schirm (14a) am Trägerrahmen (10) mit mindestens einem elastischen Trägerelement (28a, 28b, 28c, 28d; 30a, 30b, 30c, 30d) bewegbar festgelegt ist.

17. Sichtfenster nach Anspruch 16,
**dadurch gekennzeichnet, dass**
das mindestes eine Trägerelement als ein metallenes, elektrisch leitendes Federelement (30a, 30b, 30c, 30d) ausgebildet ist.

18. Sichtfenster nach einem der Ansprüche 1 bis 17,
**dadurch gekennzeichnet, dass**
die Antriebseinrichtung einen Motor (16) aufweist, der mit einer Exzenterscheibe (18) oder dergleichen Exzenterantrieb zusammenwirkt, welche bzw. welcher den Schirm (14a, 14b) in oszillierende Bewegungen versetzt.

19. Sichtfenster nach Anspruch 18,
**dadurch gekennzeichnet, dass**
die Exzenterscheibe (18) oder der Exzenterantrieb mit dem Schirm (14a, 14b) über mindestens ein federndes Verbindungselement (32a, 32b) zur Erzeugung von Schwingungsbewegungen des Schirmes mit dessen Resonanzfrequenz verbunden ist.
